# EUROPÄISCHE PATENTSCHRIFT

(11) **EP 2 907 681 B1**
(45) Veröffentlichungstag und Bekanntmachung des Hinweises auf die Patenterteilung: **17.10.2018**
(21) Anmeldenummer: 15154440.0
(22) Anmeldetag: 10.02.2015
(51) Int. Cl.: B60D 1/24, B60D 1/62, B60D 1/06

(54) **Kupplungseinheit**
Coupling unit
Unité de couplage

(30) Priorität: 14.02.2014 DE 102014101869
(43) Veröffentlichungstag der Anmeldung: 19.08.2015
(73) Patentinhaber: Bosal ACPS Holding 2 B.V., 4131 PK Vianen (NL)
(72) Erfinder: Gentner, Wolfgang, 71711 Steinheim (DE)
(74) Vertreter: Hoeger, Stellrecht & Partner Patentanwälte mbB

(56) Entgegenhaltungen:
- DE-A1-102010 029 414
- GB-A- 2 348 508
- US-A- 6 053 521

## Beschreibung

Die Erfindung betrifft eine Kupplungseinheit für eine Anhängekupplung eines Kraftfahrzeugs, umfassend eine Kupplungskugel und einen die Kupplungskugel tragenden Kupplungskugelträger.

Derartige Kupplungseinheiten sind aus dem Stand der Technik bekannt.

Das Dokument DE 10 2010 029 414 offenbart eine Kupplungseinheit gemäß dem Oberbegriff des Anspruchs 1. Bei diesen Kupplungseinheiten besteht die Anforderung, in geeigneter Weise die auf die Kupplungskugel im Betrieb wirkenden Kräfte zu erfassen, da diese Kräfte sich zum einen auf das Fahrverhalten des Kraftfahrzeugs auswirken und zum anderen ein Maß für die Belastung der Kupplungseinheit und somit der Anhängekupplung darstellen.

Der Erfindung liegt daher die Aufgabe zugrunde eine Kupplungseinheit für eine Anhängekupplung eines Kraftfahrzeugs zur Verfügung zu stellen, mit welcher in einfacher Weise und zuverlässig die auf diese wirkenden Kräfte im Betrieb erfasst werden können.

Diese Aufgabe wird durch eine Kupplungseinheit der eingangs beschriebenen Art erfindungsgemäß dadurch gelöst, dass die Kupplungseinheit eine kraftaufnehmende Struktur aufweist, welche einen sich parallel zu einer Achse erstreckenden Kanal umgreift, und dass in dem Kanal ein sich in einer Längsrichtung ungefähr parallel zu der Achse von einem ersten Ende zu einem zweiten Ende erstreckender Referenzfinger angeordnet ist, welcher an dem ersten Ende relativ zu der kraftaufnehmenden Struktur feststehend fixiert ist und sich frei von Deformationen der kraftaufnehmenden Struktur bis zu einem zweiten Ende erstreckt, und dass das zweite Ende mit einer Sensoreinheit zusammenwirkt, welche eine Relativposition des zweiten Endes relativ zu einem dieses umgreifenden Bereich der kraftaufnehmenden Struktur erfasst.

Der Vorteil der erfindungsgemäßen Lösung ist einerseits darin zu sehen, dass mit dieser erfindungsgemäßen Lösung die Möglichkeit besteht, in einfacher Weise Deformationen der kraftaufnehmenden Struktur zu erfassen, da sich bei einer Deformation der kraftaufnehmenden Struktur der das zweite Ende umgreifende Bereich der kraftaufnehmenden Struktur relativ zu dem das erste Ende fixierenden Bereich des Referenzfingers bewegt.

Diese Bewegungen erfolgen jedoch über kleine Distanzen, die jedoch durch eine entsprechend ausgebildete Sensoreinheit zuverlässig erfasst werden können.

Hinsichtlich der Ausbildung der kraftaufnehmenden Struktur wurden im Einzelnen bislang keine näheren Angaben gemacht.

So sieht ein vorteilhaftes Ausführungsbeispiel vor, dass die kraftaufnehmende Struktur den Kanal U-förmig umgreift.

Eine andere vorteilhafte Lösung sieht vor, dass die kraftaufnehmende Struktur den Kanal zumindest abschnittsweise vollständig umgreift.

Eine besonders zweckmäßige Lösung sieht vor, dass die kraftaufnehmende Struktur eine den Kanal in Umfangsrichtung geschlossen umfassende Struktur ist.

Hinsichtlich der Anordnung des Referenzfingers in dem Kanal wurden im Zusammenhang mit der bisherigen Erläuterung der einzelnen Ausführungsformen ebenfalls keine näheren Angaben gemacht.

So sieht eine vorteilhafte Lösung vor, dass der Referenzfinger sich in dem Kanal von dem ersten Ende berührungslos zur kraftaufnehmenden Struktur bis zum zweiten Ende erstreckt, das heißt in dem berührungslos verlaufenden Abschnitt keinerlei Beeinflussung durch die Deformationen der kraftaufnehmenden Struktur erfährt.

Der Referenzfinger kann selbst als in komplexer Geometrie ausgeführtes Gebilde ausgeführt sein, wobei es für die erfindungsgemäße Lösung von Vorteil ist, wenn der Referenzfinger sich nicht temperaturabhängig deformiert.

Insbesondere ist der Referenzfinger aus einem bei Temperatureinwirkung forminvarianten Material oder als forminvariantes Gebilde ausgeführt.

Alternativ dazu ist möglich den Referenzfinger so auszubilden, dass dieser dasselbe Ausdehnungsverhalten wie die kraftaufnehmende Struktur aufweist.

Zweckmäßigerweise ist vorgesehen, dass der Referenzfinger eine in sich steife Struktur aufweist, welche das zweite Ende starr oder biegesteif relativ zum ersten Ende positioniert hält.

Insbesondere ist dabei vorgesehen, dass der Referenzfinger als Stab ausgebildet ist.

Hinsichtlich der Ausbildung der Sensoreinheit wurden bislang keine näheren Angaben gemacht.

So sieht eine vorteilhafte Lösung vor, dass die Sensoreinheit mindestens einen Abstandssensor aufweist.

Ein derartiger Abstandssensor ist vorzugsweise ein magnetischer Sensor, der insbesondere mit einem Magnetfeld eines Permanentmagneten arbeitet

Zweckmäßigerweise ist der Abstandssensor an der kraftaufnehmenden Struktur fixiert.

Eine besonders raumsparende und kompakt ausgebildete Lösung sieht vor, dass der Abstandssensor an einem das zweite Ende umgebenden Bereich der kraftaufnehmenden Struktur fixiert ist.

Eine weitere vorteilhafte Lösung sieht vor, dass die Sensoreinheit mindestens zwei Abstandssensoren aufweist, die einen Abstand des zweiten Endes von der dieser umgebenden kraftaufnehmenden Struktur in unterschiedlichen Raumrichtungen erfassen.

Eine weitere vorteilhafte Lösung sieht vor, dass die Sensoreinheit mindestens zwei einander gegenüberliegende Sensoren für die Erfassung einer Relativbewegung des zweiten Endes relativ zu der kraftaufnehmenden Struktur in einer Raumrichtung aufweist.

Eine weitere vorteilhafte Lösung sieht vor, dass die Sensoreinheit mindestens zwei Sensoren für die Erfassung der Relativbewegung zwischen dem zweiten Ende und der kraftaufnehmenden Struktur in jeder Raumrichtung aufweist.

Hinsichtlich der Ausbildung des Kanals wurden im Zusammenhang mit der bisherigen Erläuterung der einzelnen Ausführungsbeispiele keine näheren Angaben gemacht.

So sieht eine vorteilhafte Lösung vor, dass der Kanal ausschließlich in dem Kupplungskugelträger angeordnet ist und dass die kraftaufnehmende Struktur durch einen den Kanal umgreifenden Abschnitt des Kupplungskugelträgers gebildet ist.

Eine andere vorteilhafte Lösung sieht vor, dass der Kanal die Kupplungskugel und einen sich an das erste Ende des Kupplungskugelträgers anschließenden Bereich desselben durchsetzt.

Alternativ oder ergänzend zu den bislang beschriebenen Lösungen sieht eine weitere vorteilhafte Lösung vor, dass der Kanal einen Kugelansatz des Kupplungskugelträgers durchsetzt, welcher die Kupplungskugel trägt.

Eine besonders zweckmäßige Lösung sieht vor, dass der Kanal die Kupplungskugel, den Kugelansatz und einen sich auf einer der Kupplungskugel gegenüberliegenden Seite des Kugelansatzes an diesen anschließenden Bereich des Kupplungskugelträgers durchsetzt.

In diesem Fall bilden all diese Elemente der Kupplungseinheit die kraftaufnehmende Struktur.

Eine besonders günstige Lösung sieht vor, dass zumindest der Kugelansatz die kraftaufnehmende und durch die Kraft auf die Kupplungskugel deformierbare Struktur bildet, da der Kugelansatz in der Regel der Abschnitt des Kupplungskugelträgers ist, welcher den größten Deformationen unterliegt.

Bei dieser Lösung ist es jedoch ebenfalls günstig, wenn die kraftaufnehmende deformierbare Struktur zumindest einen Teil der Kupplungskugel mitumfasst.

Ferner ist es zweckmäßig, wenn die kraftaufnehmende deformierbare Struktur zumindest einen querschnittserweiterten Bereich des Kupplungskugelträgers mit umfasst, wobei dieser querschnittserweiterte Bereich vorzugsweise der Bereich ist, welcher den Kugelansatz trägt.

Hinsichtlich der Anordnung des Referenzfingers, insbesondere im Fall, dass der Kugelansatz die kraftaufnehmende deformierbare Struktur bildet, sieht eine zweckmäßige Lösung vor, dass der Referenzfinger mit seinem ersten Ende relativ zur Kupplungskugel fixiert angeordnet ist.

Eine andere vorteilhafte Lösung sieht vor, dass der Referenzfinger mit seinem ersten Ende relativ zum querschnittserweiterten Bereich des Kupplungskugelträgers fixiert angeordnet ist.

Zur Auswertung der Signale der Sensoreinheit wurden bislang keine näheren Angaben gemacht.

So sieht eine vorteilhafte Lösung vor, dass die Sensoreinheit mit einer Auswerteeinheit gekoppelt ist, welche einen kräftefreien Zustand der Kupplungseinheit erkennt, in dem kräftefreien Zustand die Abstände zum zweiten Ende des Referenzfingers erfasst und ausgehend von dem kräftefreiem Zustand aus der bezogen auf den kräftefreien Zustand relativen Abstandsänderung zwischen dem zweiten Ende und der kraftaufnehmenden Struktur die Kraft auf die Kupplungskugel ermittelt.

Insbesondere ist dabei vorgesehen, dass in der Auswerteeinheit eine für die Kupplungseinheit spezifische Eichkurve abgespeichert ist, mit welchem die Ermittlung der auf die Kupplungskugel wirkenden Kraft aus den Abstandsänderungen erfolgt.

Weiter ist vorteilhafterweise vorgesehen, dass die Auswerteeinheit den kräftefreien Zustand durch zusätzliche Informationen erkennt.

Eine Möglichkeit ist die, dass die Auswerteeinheit den kräftefreien Zustand daran erkennt, dass eine Anhängekupplungsteckdose nicht aktiv ist, das heißt keine Versorgungsverbindung mit einem an der Anhängekupplung anzuhängenden Objekt steht.

Eine andere Möglichkeit ist die, dass die Auswerteeinheit aufgrund eines in der Kupplungskugel ebenfalls vorgesehenen Drehwinkelsensors ermittelt, ob an der Kupplungskugel eine Kupplungskugelaufnahme angreift oder nicht.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine teilweise aufgeschnitten Seitenansicht eines Heckbereichs eines Kraftfahrzeugs mit einer Anhängekupplung;
- Fig. 2: eine perspektivische Darstellung einer Anhängekupplung umfassend einen Querträger und eine Kupplungseinheit;
- Fig. 3: eine ausschnittsweise Darstellung eines Bereichs eines Kupplungskugelträgers gemäß einem ersten Ausführungsbeispiel einer erfindungsgemäßen Kupplungseinheit;
- Fig. 4: eine Ansicht des in Fig. 3 dargestellten Bereichs in Richtung des Pfeils A in Fig. 3;
- Fig. 5: eine ausschnittsweise Darstellung eines zweiten Ausführungsbeispiels einer erfindungsgemäßen Kupplungseinheit im Bereich einer Kupplungskugel eines Kugelansatzes und eines querschnittserweiterten Bereichs eines Kupplungskugelträgers;
- Fig. 6: eine Darstellung ähnlich Fig. 5 eines dritten Ausführungsbeispiels einer erfindungsgemäßen Kupplungseinheit;
- Fig. 7: eine Darstellung ähnlich Fig. 5 eines vierten Ausführungsbeispiels einer erfindungsgemäßen Kupplungseinheit;
- Fig. 8: eine Darstellung des vierten Ausführungsbeispiels gemäß Fig. 7 in einer Draufsicht in Richtung des Pfeils B in Fig. 7 mit abgenommenem Kugelkappenelement;
- Fig. 9: eine Darstellung ähnlich Fig. 8 einer Variante des vierten Ausführungsbeispiels;
- Fig. 10: eine Darstellung ähnlich Fig. 5 eines fünften Ausführungsbeispiels einer erfindungsgemäßen Kupplungseinheit;
- Fig. 11: eine Darstellung ähnlich Fig. 5 eines sechsten Ausführungsbeispiels einer erfindungsgemäßen Kupplungseinheit und
- Fig. 12: eine schematische Darstellung einer Auswerteeinheit in Verbindung mit einer erfindungsgemäßen Sensoreinheit.

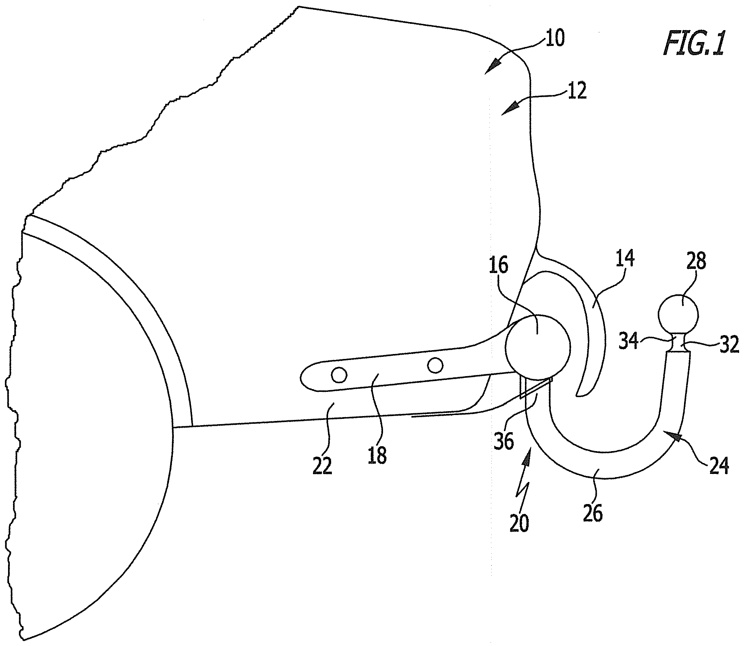

Ein in Fig. 1 dargestelltes und als Ganzes mit 12 bezeichnetes Heck einer mit 10 bezeichneten Fahrzeugkarosserie eines Kraftfahrzeugs trägt eine heckseitige Stoßfängereinheit 14, welche einen als Ganzes mit 16 bezeichneten Querträger einer Anhängekupplung 20 übergreift, wobei der Querträger 16 üblicherweise durch beiderseits desselben mit diesem verbundene Längsträger 18 an hierfür vorgesehenen Montagebereichen 22 des Hecks 12 der Fahrzeugkarosserie 10 fixiert ist.

An dem Querträger 16 ist eine als Ganzes mit 24 bezeichnete Kupplungseinheit der Anhängerkupplung 20 angeordnet, welche einen am Querträger 16 gehaltenen Kupplungskugelträger 26 sowie eine Kupplungskugel 28 aufweist, die an einem Endbereich 32 des Kupplungskugelträgers 26 gehalten ist.

Vorzugsweise bildet das Ende 32 des Kupplungskugelträgers 26 einen Kugelansatz 34, welcher eine zylinderähnliche Außenkontur aufweist und einen gegenüber dem übrigen Querschnitt des Kupplungskugelträgers 26 insbesondere reduzierten Querschnitt aufweist.

Ein dem Ende 32 gegenüberliegendes andere Ende 36 des Kupplungskugelträgers 26 ist entweder starr oder lösbar oder schwenkbar mit dem Querträger 16 verbunden.

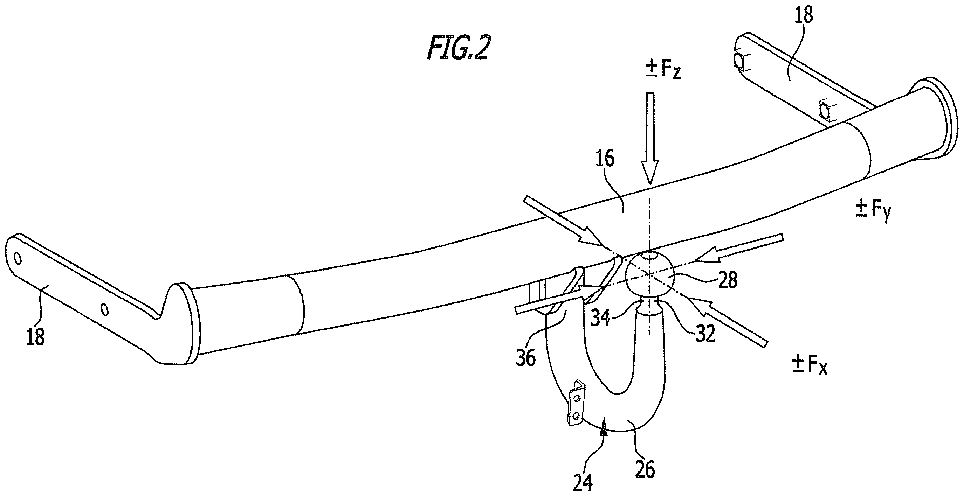

Wie in Fig. 2 dargestellt, wirken auf die Kupplungskugel 28 beim Betrieb der Anhängerkupplung, bei welchem an der Kupplungskugel 28 eine Anhängelast, beispielsweise mittels einer Aufnahme für die Kupplungskugel 28 angreift, Kräfte FX in X-Richtung, das heißt, in horizontaler Längsrichtung der Fahrzeugkarosserie 10, Kräfte FY in Y-Richtung, das heißt ebenfalls horizontal verlaufend, jedoch senkrecht zur horizontalen Längsrichtung der Fahrzeugkarosserie 10 und Kräfte FZ in Z-Richtung, das heißt, in vertikaler Richtung senkrecht zur X-Richtung und zur Y-Richtung.

All diese Kräfte FX, FY und FZ wirken sich letztlich auch auf das Fahrverhalten eines mit einer derartigen Anhängekupplung versehenen Kraftfahrzeugs aus.

Die Erfassung von einer oder mehreren auf die Kupplungseinheit 24 wirkenden Kräfte kann in unterschiedlichster Art und Weise erfolgen.

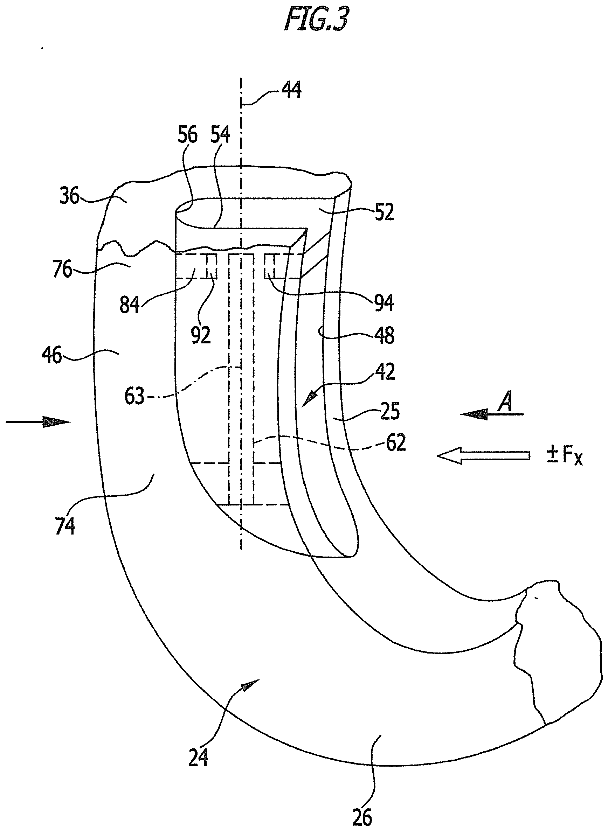

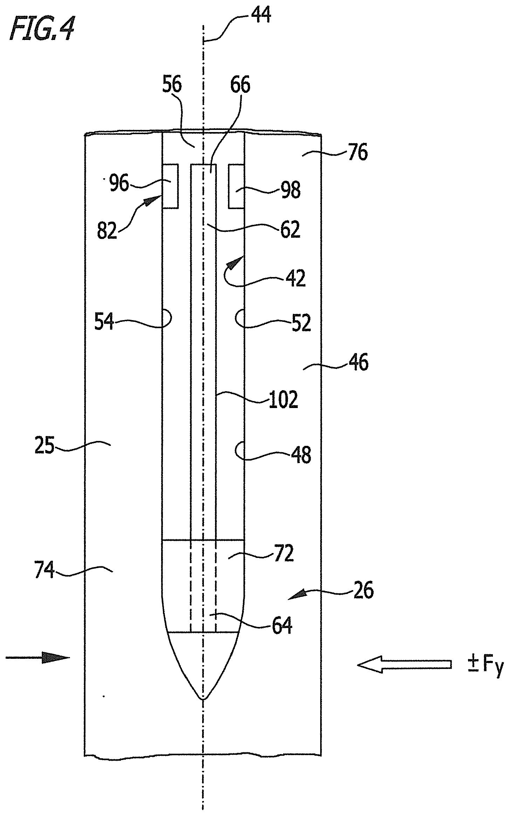

Bei einem ersten Ausführungsbeispiel der erfindungsgemäßen Kupplungseinheit 24, dargestellt in Fig. 3 und 4, weist der Kupplungskugelträger 26 im Bereich nahe des zweiten Endes 36 einen sich U-förmig von einer der Fahrzeugkarosserie 10 abgewandten Rückseite 25 des Kupplungskugelträgers 26 in den Kupplungskugelträger 26 hinein erstreckenden Kanal 42 auf, welcher sich in Richtung einer Achse 44 in dem Kupplungskugelträger 26 erstreckt, wobei eine kraftaufnehmende Struktur 46 des Kupplungskugelträgers 26 den Kanal 42 umgreift, jedoch beispielsweise nicht vollständig umgreift, sondern so umgreift, dass der Kanal 42 eine sich mindestens mit einer Komponente in Richtung der Achse 44 erstreckende Öffnung 48 aufweist, wobei die Öffnung 48 beispielsweise in diesem Fall der Kupplungskugel 28 zugewandt in dem Kupplungskugelträger 26 vorgesehen ist.

Somit weist der Kanal 42 ausgehend von der Öffnung 48 zwei im Abstand voneinander verlaufende Seitenwände 52 und 54 auf, die in eine der Öffnung 48 gegenüberliegende Rückwand 56 übergehen.

Dabei verläuft der Kanal 42 nicht zwangsläufig durch den gesamten Kupplungskugelträger 26, sondern lediglich in einem Teilabschnitt desselben, so dass die kraftaufnehmende Struktur 46 einen den Kanal 42 umgreifenden, wenn auch nicht vollständig umgreifenden Teilabschnitt des Kupplungskugelträgers 26 bildet.

In dem Kanal 42 ist ein als Ganzes mit 62 bezeichneter Referenzfinger angeordnet, welcher sich mit seiner Längsrichtung 63 vorzugsweise parallel zur Mittelachse 44 von einem ersten Ende 64 bis zu einem zweiten Ende 66 erstreckt.

Im Bereich des ersten Endes 64 ist der Referenzfinger 62 beispielsweise mittels eines Haltekörpers 72 relativ zu der kraftaufnehmenden Struktur 46 und unbeweglich zu dieser gehalten, so dass das erste Ende 64 des Referenzfingers 62 den Bewegungen eines den Haltekörper 72 fixierenden Abschnitts 74 der kraftaufnehmenden Struktur 46 folgt.

Alternativ dazu ist es auch denkbar, den Referenzfinger 62 direkt in der kraftaufnehmenden Struktur 46 zu fixieren.

Das zweite Ende 66 des Referenzfingers 62 wirkt dabei mit einer Sensoreinheit 82 zusammen, welche beispielsweise in Richtung quer zur Mittelachse 44 oder quer zur Längsrichtung 63 im Abstand von dem zweiten Ende 66 des Referenzfingers 62 angeordnete Sensoren 92, 94, 96 und 98 aufweist, wobei die Sensoren 92 und 94 in einer ersten Richtung beiderseits des zweiten Endes 66 im Abstand von diesem angeordnet sind und die Sensoren 96 und 98 in einer zweiten quer zur ersten Richtung verlaufenden Richtung beiderseits des zweiten Endes 66 im Abstand von diesem angeordnet sind.

Die Sensoreinheit 82 ist mit einer Sensorbasis 84 an einem Abschnitt 76 der kraftaufnehmenden Struktur 46 fixiert, wobei der Abschnitt 76 einen Abstand von dem Abschnitt 74 aufweist, welcher ungefähr der Länge des Referenzfingers 62 entspricht.

Insbesondere erstreckt sich der Referenzfinger 62 ausgehend von dem ersten Ende 64 mit seiner Außenkontur 102 berührungsfrei in dem Kanal 42, das heißt insbesondere im Abstand von den Seitenwänden 52 und 54 sowie der Rückwand 56, so dass die Bewegungen des zweiten Endes 66 des Referenzfingers 62 nicht durch den sich außerhalb des Abschnitts 74 erstreckenden Teils der kraftaufnehmenden Struktur 46 beeinflusst sind.

Erfolgt nun eine Deformation des Kupplungskugelträgers 26 so führt dies auch zwangsläufig zu einer Deformation des Kupplungskugelträgers 26 im Bereich seiner kraftaufnehmenden und den Kanal 42 umgreifenden Struktur 46 und somit zu einer Relativbewegung des Abschnitts 74 der kraftaufnehmenden Struktur 46 zum Abschnitt 76 der kraftaufnehmenden Struktur 46.

Der Referenzfinger 62 ist jedoch lediglich relativ zum Abschnitt 74 fixiert, so dass jede Bewegung des Abschnitts 76 der kraftaufnehmenden Struktur 46 relativ zum Abschnitt 74 zu einer Veränderung des Abstandes des zweiten Endes 66 von den Sensoren 92, 94, 96 oder 98 führt, je nachdem, in welcher Richtung die Kraft gerichtet ist, die auf die Kupplungskugel 28 einwirkt und sich somit auch auf den Kupplungskugelträger 26 als Ganzes in allen seinen Bereichen zwischen dem ersten Ende 32 und dem zweiten Ende 36 auswirkt.

So verändert beispielsweise eine Kraft FX auf die Kupplungskugel 28 die Abstände des zweiten Endes 66 zwischen den Sensoren 92 und 94 und eine Kraft FY auf die Kupplungskugel 28 verändert die Abstände des zweiten Endes 66 von den Sensoren 96 und 98.

Die Sensoren 92, 94, 96 und 98 sind vorzugsweise Abstandssensoren, insbesondere magnetisch arbeitende Abstandssensoren, das insbesondere heißt auf der Basis einer Veränderung eines Magnetfeldes arbeitende Abstandssensoren, die in der Lage sind, mit hoher Auflösung im Bereich von weniger als 1 µm einen Abstand zwischen dem jeweiligen Sensor 92, 94, 96 und 98 und dem zweiten Ende 66 zu erfassen, sofern das zweite Ende 66 des Referenzfingers 62 ein ein Magnetfeld beeinflussendes Material ist.

Beispielsweise umfasst jeder der Sensoren 92, 94, 96, 98 einen Permanentmagnet und einen Magnetfeldsensor, welch letzterer eine Veränderung seiner magnetischen Durchflutung bei sich änderndem Abstand vom zweiten Ende erfährt und somit messen kann.

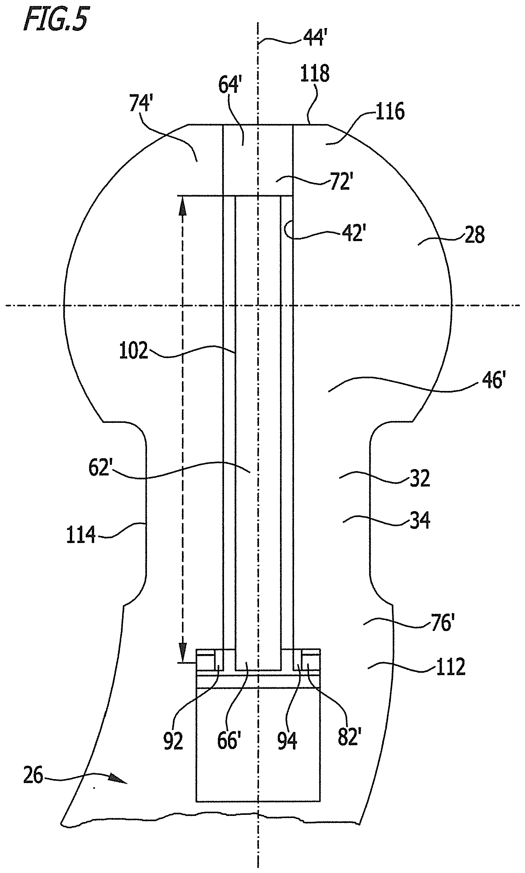

Bei einem zweiten Ausführungsbeispiel, dargestellt in Fig. 5, ist der Kanal nicht im Bereich nahe des zweiten Endes 36 angeordnet, sondern der Kanal 42' erstreckt sich durch die gesamte Kupplungskugel 28 hindurch und von dieser ausgehend in das zweite Ende 32 des Kupplungskugelträgers 26 hinein, und zwar durch den Kugelansatz 34 hindurch bis in einen sich an den Kugelansatz 34 anschließenden querschnittserweiternden Bereich 112. Die Achse 44', längs welcher der Kanal 42' verläuft, ist dabei eine Mittelachse des Kugelansatzes 34, welcher vorzugsweise eine zur Achse 44' zylindrisch verlaufende Außenkontur aufweist.

Die kraftaufnehmende Struktur 46' ist bei diesem zweiten Ausführungsbeispiel einerseits durch die Kupplungskugel 28 selbst sowie den Kugelansatz 34 und den querschnittserweiternden Bereich 112 des Kupplungskugelträgers 26 gebildet und umschließt den Kanal 42' vollständig, welcher vorzugsweise als zur Achse 44' zylindrische Bohrung durch die Kupplungskugel 28, den Kugelansatz 34 und den querschnittserweiternden Bereich 112 der Kupplungseinheit 24 ausgebildet ist.

Bei dem zweiten Ausführungsbeispiel ist der Referenzfinger 62 am ersten Ende 64 durch den Haltekörper 72' in einem Abschnitt 74' der kraftaufnehmenden Struktur 46' gehalten, welcher beispielsweise ein dem Kugelansatz 34 gegenüberliegender oberer Kugelkappenbereich 116 der Kupplungskugel 28 ist, der sich unmittelbar an eine dem Kugelansatz 34 abgewandte Flachseite 118 der Kupplungskugel 28 anschließt.

Der Referenzfinger 62' erstreckt sich bei diesem Ausführungsbeispiel durch die Kupplungskugel 28 und den Kugelansatz 34 hindurch bis in den querschnittserweiternden Bereich 112 des Kupplungskugelträgers 26 hinein, so dass das zweite Ende 66' in dem querschnittserweiterten Bereich 112 liegt und der querschnittserweiternde Bereich 112 des Kupplungskugelträgers 26 den Abschnitt 76' bildet, an welchem die Sensoreinheit 82' fixiert ist.

Auch bei diesem Ausführungsbeispiel erstreckt sich der Referenzfinger 62 ausgehend von seinem ersten Ende 64' berührungsfrei zum Kanal 42' bis zum zweiten Ende 66', so dass eine Bewegung des Abschnitts 76' der kraftaufnehmenden Struktur 46' relativ zum Abschnitt 74' derselben ebenfalls zu einer Abstandsänderung zwischen den Sensoren 92, 94, 96 und 98 der Sensoreinheit 82' von dem zweiten Ende 66' führt.

In diesem Fall ist die kraftaufnehmende Struktur 46', welche sich von dem Bereich 74' bis zum Bereich 76' erstreckt, insbesondere im Bereich des Kugelansatzes 34 deformierbar, so dass die Bewegungen des Bereichs 76' relativ zum Bereich 74' primär durch Deformationen im Bereich des Kugelansatzes 34 bedingt sind.

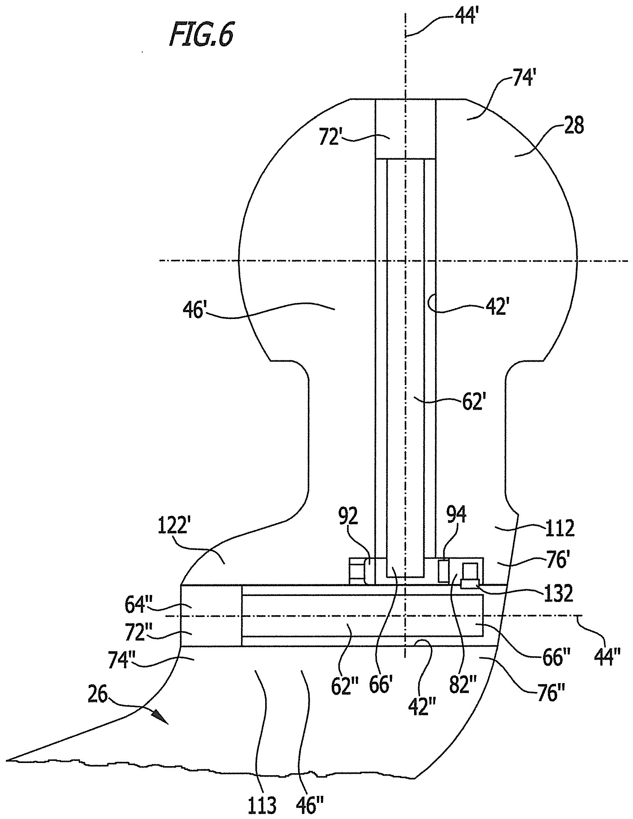

Bei einem dritten Ausführungsbeispiel einer erfindungsgemäßen Kupplungseinheit, dargestellt in Fig. 6, sind diejenigen Teile, die mit denen des zweiten Ausführungsbeispiels identisch sind, mit denselben Bezugszeichen versehen, so dass hinsichtlich der Beschreibung derselben vollinhaltlich auf die Ausführungen zum zweiten Ausführungsbeispiel Bezug genommen werden kann.

Im Gegensatz zum zweiten Ausführungsbeispiel, dargestellt in Fig. 5, ist bei dem dritten Ausführungsbeispiel, dargestellt in Fig. 6, zusätzlich zum Kanal 42' ein Kanal 42" vorgesehen, der sich längs einer Achse 44", die quer zur Achse 44' verläuft, und sich durch den Kupplungskugelträger 26 in einem querschnittserweiterten Bereich 122' erstreckt, wobei in dem Kanal 42" ebenfalls ein Referenzfinger 62" vorgesehen ist, der sich von einem ersten Ende 64" zu einem zweiten Ende 66" erstreckt und im Bereich des ersten Endes 64" durch einen Haltekörper 72" fixiert ist.

In diesem Fall ist die kraftaufnehmende Struktur 46" der querschnittsverdichtete Bereich 112 des Kupplungskugelträgers 26, welcher den Kanal 42" umgreift, wobei eine Bewegung des Abschnitts 76" relativ zum Abschnitt 74", an welchem das erste Ende 64" durch den Haltekörper 72" fixiert ist, ebenfalls zu einer Abstandsänderung zwischen einem Sensor 132 und dem zweiten Ende 66" des Referenzfingers 62" führt.

Vorzugsweise verläuft dabei der Kanal 42" so, dass der Sensor 132 an einer Sensoreinheit 82" angeordnet ist, die gleichzeitig auch die Sensoren 92 und 94 zur Erfassung des zweiten Endes 66' des Referenzfingers 62' trägt.

Da die Achse 44" und somit auch der Kanal 42" quer zur Achse 44' verlaufen, besteht die Möglichkeit, auch Deformationen des Kupplungskugelträgers 26 zu erfassen, die durch eine Kraft FZ in Z-Richtung auf die Kupplungskugel 28 entstehen.

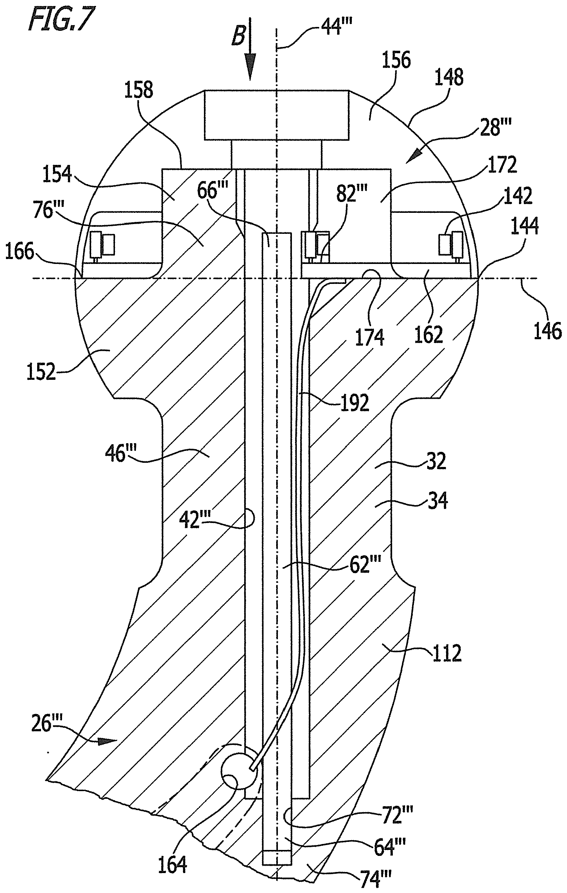

Bei einem vierten Ausführungsbeispiel einer erfindungsgemäßen Kupplungseinheit, dargestellt in Fig. 7, erstreckt sich der Kanal 42"', ähnlich wie beim zweiten Ausführungsbeispiel sowohl durch die Kupplungskugel 28, den Kugelansatz 34 und in den querschnittserweiternden Bereich 112 hinein.

Allerdings erfolgt eine Fixierung des Referenzfingers 62''' in diesem Fall im Bereich seines ersten Endes 64''' in einem durch den Kupplungskugelträger 26 selbst gebildeten Haltekörper 72''', der einen einstückigen Bereich des Kupplungskugelträgers 26''' darstellt.

Somit ist der Referenzfinger 62''' relativ zu dem querschnittserweiterten Bereich 112 des Kupplungskugelträgers 26 fixiert und somit liegt das zweite Ende 66''' des Referenzfingers 62''' innerhalb der Kupplungskugel 28'''.

Bei dem beschriebenen Ausführungsbeispiel ist die Kupplungskugel 28''' so ausgeführt, dass sie einen Drehwinkelsensor 142 aufweist, welcher nahe einer Äquatorlinie 144, vorzugsweise auf einer dem Kugelansatz 34 abgewandten Seite einer die Äquatorlinie 144 schneidenden Trennebene 146, angeordnet ist.

Ferner ist die Kupplungskugel 28 bei diesem Ausführungsbeispiel zweigeteilt und weist einen sich von dem Kugelansatz 34 bis zur Trennebene 146 erstreckenden Basisbereich 152 auf, einen sich ausgehend vom Basisbereich 152 erstreckenden und insbesondere mit diesem einstückig verbundenen Tragbereich 154 auf, der sich allerdings nicht bis zur Kugeloberfläche 148 erstreckt, sondern eine relativ zu dieser zurückgesetzte Stützfläche 158 aufweist, die beispielsweise parallel zur Trennfläche 146 verläuft. Auf den Tragbereich 154 ist noch ein Kugelkappenelement 156 aufgesetzt, das seinerseits sich am Tragbereich 154 auf der Stützfläche 158 abstützt und an dem Tragbereich 154 durch Formschluss bezüglich einer Drehung um die Achse 44''' drehfest fixiert ist und den Teil der Kugeloberfläche bildet, der auf einer dem Kugelansatz 34 abgewandten Seite der Trennebene 146 und des Drehwinkelsensors 142 liegt.

Ein derartiger Drehwinkelsensor 142 ist beispielsweise in der deutschen Patentanmeldung DE 10 2012 105 316.2 beschrieben, auf welche diesbezüglich vollinhaltlich Bezug genommen wird.

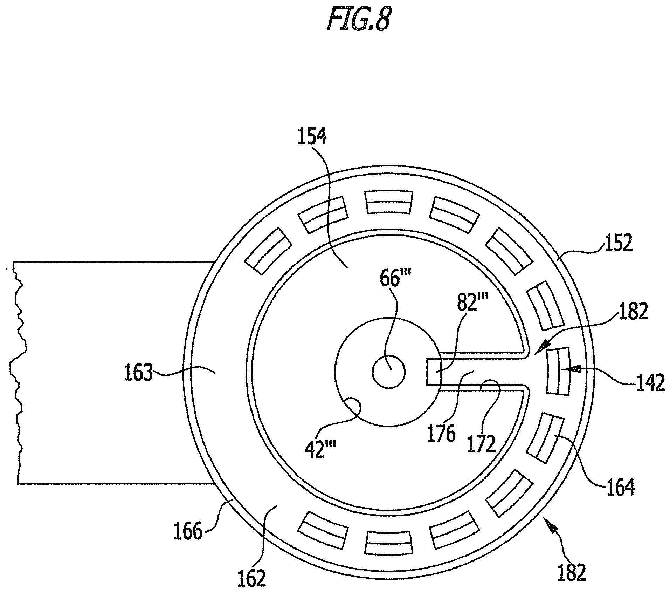

Bei diesem Ausführungsbeispiel umfasst der Drehwinkelsensor 142 eine einen Ringkörper 163 umfassende Platine 162, auf welchem, wie in Fig. 8 dargestellt, um den Tragbereich 154 herum aufeinanderfolgend insbesondere ebenfalls als magnetische Abstandssensoren mit einem Permanentmagnet und einem Magnetfeldsensor arbeitende Sensorelemente 164 angeordnet sind, die dazu dienen, eine außerhalb der Kupplungskugel 28" angeordnete und an dieser anliegende Kugelkupplungsaufnahme hinsichtlich ihrer Position zu erfassen.

Die Platine 216 liegt dabei auf einer um den Tragbereich 154 ungefähr in Höhe der Trennebene 146 umlaufenden Ringfläche 166 auf und ist selbst, wie in Fig. 8 dargestellt, ringförmig ausgebildet.

Ferner ist der Tragbereich 154 mit einem diesen radial zur Mittelachse 44''' durchsetzenden und sich von dem Kanal 42''' radial nach außen erstreckenden Schlitz 172 versehen, der so ausgebildet ist, dass ein Schlitzboden 174 in Höhe der Ringfläche 166 verläuft, und sich der Schlitz 172 ausgehend von dem Schlitzboden 174 bis zu der Stützfläche 158 des Tragbereichs 154 erstreckt.

In diesen Schlitz 172 hinein erstreckt sich eine an den Ringkörper 163 der Platine 162 des Drehwinkelsensors 142 angeformte Zunge 176, welche bis in den Kanal 42''' hinein verläuft und angrenzend an den Kanal 42''' oder in diesen hineinragend die Sensoreinheit 82''' trägt, so dass die Sensoreinheit 82''' und der Drehwinkelsensor 142, die auf der Platine 162 angeordnet sind, zusammen ein Sensorsystem 182 bilden, welches als Ganzes festsitzend an dem Basisbereich 152 und dem Tragbereich 154 montiert und verschaltet werden kann.

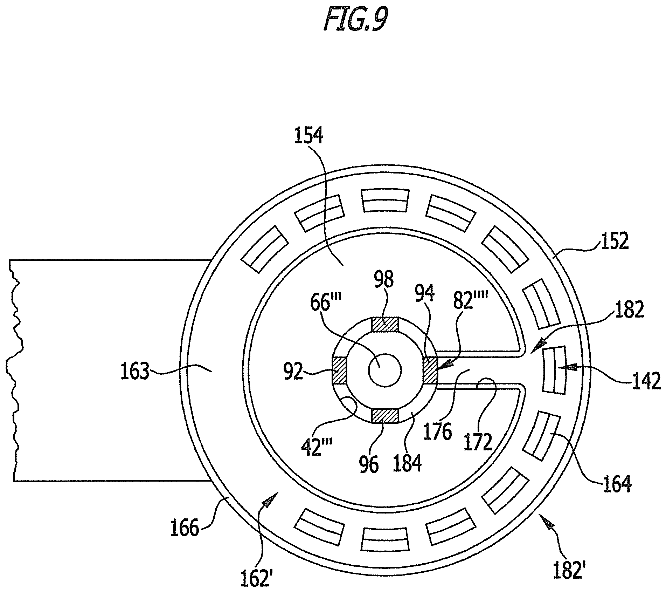

Bei einer Variante zu dem vierten Ausführungsbeispiel, dargestellt in Fig. 9, ist an die Zunge 176 der Platine 162' noch einstückig ein Haltering 184 angeformt, der bei der Montage der Platine 162' innerhalb des Kanals 42''' positionierbar ist, so dass in diesem Fall die Sensoreinheit 82"" nicht nur einen Sensor, sondern insgesamt die vier Sensoren 92, 94, 96, 98 aufnehmen kann, die es aufgrund einer Erfassung des jeweiligen Abstandes zum zweiten Ende 66''' des Referenzfingers 62''' ermöglichen, beispielsweise Kräfte FX in X-Richtung als auch Kräfte FY in Y-Richtung zu erfassen, sofern diese zu einer Deformation der kraftaufnehmenden Struktur 46''' führen, wie dies beispielsweise im Zusammenhang mit dem ersten Ausführungsbeispiel der erfindungsgemäßen Sensoreinheit 82 erläutert wurde.

Bei dieser Variante bilden die auf der Platine 162 sitzende Sensoreinheit 82''' und der Drehwinkelsensor 142 ebenfalls ein Sensorsystem 182', das als Einheit montierbar und an dem Basisbereich 152 und dem Tragbereich 154 fixierbar ist.

Zweckmäßigerweise wird bei diesem Ausführungsbeispiel der Kanal 42''' nicht nur dazu ausgenützt, den Referenzfinger 62''' aufzunehmen, sondern auch dazu, elektrische Zuleitungen 192 sowohl zu dem Drehwinkelsensor 142 als auch zur Sensoreinheit 82''' aufzunehmen, die ausgehend von einer im Bereich des querschnittserweiternden Abschnitts 112 in den Kanal 42''' mündenden Seitenöffnung 194 in den Kanal 42''' eintreten und längs des Kanals 42''' bis in die Kupplungskugel 28 zu dem Drehwinkelsensor 142 und zur Sensoreinheit 82''' verlaufen.

Im Übrigen sind diejenigen Teile des vierten Ausführungsbeispiels, die mit denen der vorstehenden Ausführungsbeispiele identisch sind, mit denselben Bezugszeichen versehen, so dass auf die Ausführungen zu diesen Ausführungsbeispielen Bezug genommen werden kann.

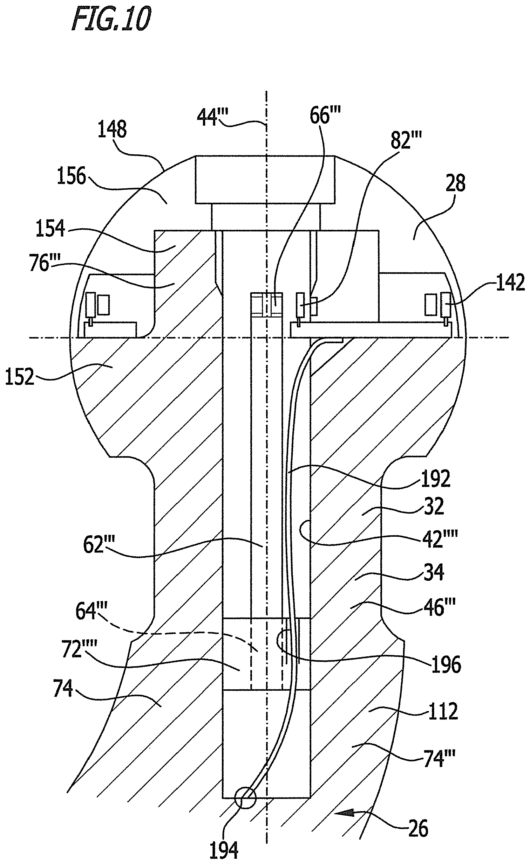

Bei einem fünften Ausführungsbeispiel, dargestellt in Fig. 10 entsprechen die Verhältnisse im Wesentlichen denen des vierten Ausführungsbeispiels, allerdings mit dem Unterschied, dass der Referenzfinger 62''' durch einen Haltekörper 72"" in dem Kanal 42"" im querschnittserweiterten Bereich 112, welcher somit den Abschnitt 74 der kraftaufnehmenden Struktur 46''' darstellt, fixiert ist.

In diesem Fall sind die elektrischen Zuleitungen 192 ebenfalls durch den Kanal 42"" geführt, allerdings auch durch den Haltekörper 72"", beispielsweise durch einen Durchbruch 196 im Haltekörper 72"", hindurchgeführt und verläuft in dem Kanal 42"" bis zum Drehwinkelsensor 142 und zur Sensoreinheit 82"'.

Im Übrigen ist das Fünfte Ausführungsbeispiel in gleicher Weise ausgebildet wie das vierte Ausführungsbeispiel, so dass diejenigen Elemente, die mit denen des vierten und der voranstehenden Ausführungsbeispiele identisch sind, mit denselben Bezugszeichen versehen sind und folglich hinsichtlich der Beschreibung dieser Elemente im Einzelnen vollinhaltlich auf das vierte Ausführungsbeispiel Bezug genommen werden kann.

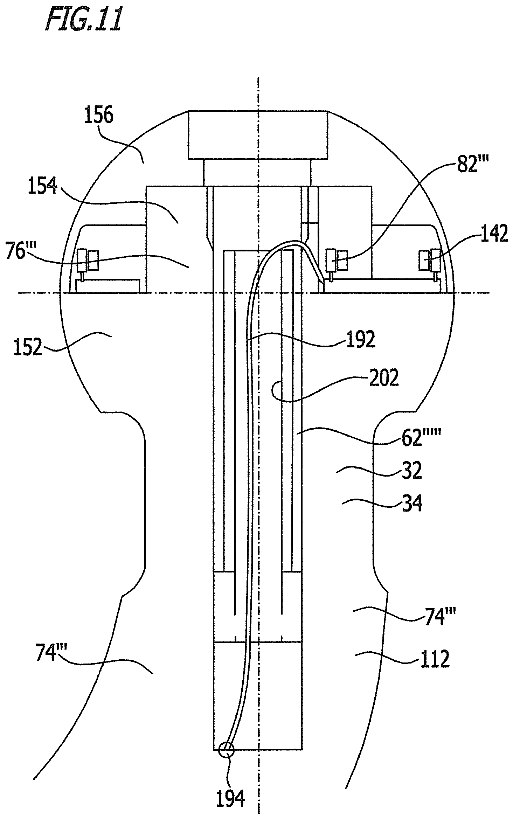

Bei einem sechsten Ausführungsbeispiel, dargestellt in Fig. 11 ist abweichend vom fünften Ausführungsbeispiel der Referenzfinger 62" als Rohrkörper ausgebildet, welcher einen Zentralkanal 202 umschließt, durch welchen die elektrische Zuleitung 192, die zu dem Drehwinkelsensor 142 und der Sensoreinheit 82''' verläuft, geführt ist.

Im Übrigen sind alle anderen Elemente, die mit denen des fünften Ausführungsbeispiels und der übrigen voranstehenden Ausführungsbeispiele identisch sind, mit denselben Bezugszeichen versehen, so dass hinsichtlich der Beschreibung derselben vollinhaltlich auf die Ausführungen zum ersten Ausführungsbeispiel verwiesen werden kann.

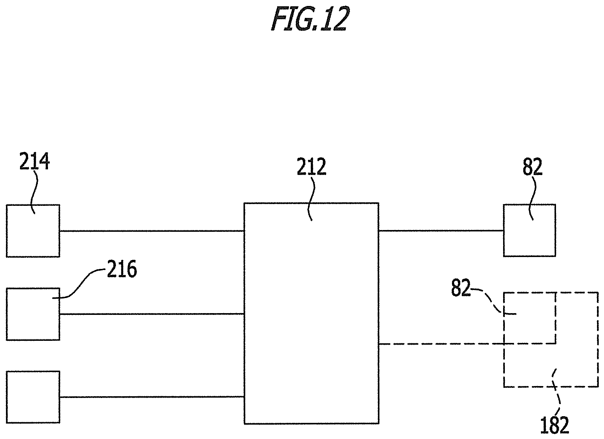

Wie in Fig. 12 dargestellt, ist bei allen Ausführungsbeispiele eine mit der Sensoreinheit 82 oder gegebenenfalls dem Sensorsystem 182 verbundene Auswerteeinheit 212 vorgesehen, welche die von der Sensoreinheit erfassten Abstandsänderungen zwischen dem einen Sensor 92 oder den Sensoren 92, 94, 96, 98 relativ zum zweiten Ende 66 des Referenzfingers 62 erfasst und diese Abstandsänderungen auswertet.

Diese Abstandsänderungen sind jedoch nur dann aussagekräftig, wenn die Auswerteeinheit 212 in der Lage ist, einen kräftefreien Ausgangszustand der Kupplungseinheit 24 zu erfassen.

Aus diesem Grund ist die Auswerteeinheit 212 beispielsweise mit einer Fahrzeugelektrik 214 verbunden, die erkennt, ob beispielsweise eine elektrische Versorgungsverbindung zu einem Anhänger oder zu einem auf der Anhängekupplung 20 montierbaren System besteht, insbesondere durch einen in eine Kupplungssteckdose eingesteckten Versorgungsstecker, und beispielsweise stets nach aktivieren der Fahrzeugelektrik durch den Zündschlüssel überprüft, ob eine Verbindung zu einem an der Anhängekupplung 20 angreifenden System über die Kupplungssteckdose besteht.

Besteht diese Verbindung nicht und wird die Fahrzeugelektrik aktiviert, so nimmt die Auswerteeinheit 212 die durch die Sensoreinheit 82 erfassten Abstandswerte als kräftefreie Referenzwerte an und speichert diese.

Im Falle einer Anhängekupplung 20, bei welcher die Kupplungseinheit 24 zwischen einer Arbeitsstellung und einer Ruhestellung verschwenkbar im Querträger 16 gehalten ist, besteht zwischen der Auswerteeinheit 212 und einer Steuerung 216 für das Verschwenken der Kupplungseinheit 24 eine Verbindung, so dass die Auswerteeinheit 212 abfragen kann, ob ein Verschwenken der Kupplungseinheit 24 von der Arbeitsstellung in die Ruhestellung oder umgekehrt erfolgt ist.

Nach jedem Verschwenken von der Ruhestellung in die Arbeitsstellung nimmt die Auswerteeinheit 212 einen kräftefreien Zustand der Kupplungseinheit an und erfasst in diesem Zustand die von der Sensoreinheit 82 gemessenen Abstandswerte zum zweiten Ende 66 des Referenzfingers 62, so dass diese Abstandswerte als belastungsfreier Referenzzustand gespeichert werden können.

Ist dagegen ein Sensorsystem 182 vorgesehen, so ist es der Auswerteeinheit 212 möglich, über den Drehwinkelsensor 142 zu erfassen, ob an der Kupplungskugel 28 eine Kupplungskugelaufnahme angreift oder nicht.

Solange keine Kupplungskugelaufnahme an der Kupplungskugel 28 angreift, können die von der Sensoreinheit 84 erfassten Abstandswerte zum zweiten Ende 66 des Referenzfingers 62 als belastungsfreie Referenzwerte von der Auswerteeinheit 212 gespeichert werden.

## Patentansprüche

1. Kupplungseinheit (24) für eine Anhängekupplung (20) eines Kraftfahrzeugs, umfassend eine Kupplungskugel (28) und einen die Kupplungskugel (28) tragenden Kupplungskugelträger (26),
wobei die Kupplungseinheit (24) eine kraftaufnehmende Struktur (46) aufweist, welche einen sich parallel zu einer Achse (44) erstreckenden Kanal (42) umgreift, und
wobei in dem Kanal (42) ein sich mit einer Längsrichtung (63) ungefähr parallel zu der Achse (44) von einem ersten Ende (64) zu einem zweiten Ende (66) erstreckender Referenzfinger (62) angeordnet ist, welcher an dem ersten Ende (64) relativ zu der kraftaufnehmenden Struktur (46) feststehend fixiert ist und sich frei von Deformationen der kraftaufnehmenden Struktur (46) bis zum zweiten Ende erstreckt, **dadurch gekennzeichnet,**
**dass** der Referenzfinger (62) sich in dem Kanal (42) von dem ersten Ende (64) berührungslos zur kraftaufnehmenden Struktur (46) bis zu dem zweiten Ende (66) erstreckt, dass der Referenzfinger (62) eine in sich steife Struktur aufweist, welche das zweite Ende (66) starr oder biegesteif relativ zum ersten Ende (64) positioniert hält, dass das zweite Ende (66) mit einer Sensoreinheit (82) zusammenwirkt, welche eine Relativposition des zweiten Endes (66) relativ zu einem dieses umgreifenden Bereich (76) der kraftaufnehmenden Struktur (46) durch mindestens einen Abstandssensor (92, 94, 96, 98) erfasst.

2. Kupplungseinheit nach Anspruch 1, **dadurch gekennzeichnet, dass** insbesondere der Referenzfinger (62) als Stab ausgebildet ist.

3. Kupplungseinheit nach Anspruch 1 oder 2, **dadurch gekennzeichnet, dass** der Abstandssensor (92, 94, 96, 98) an der kraftaufnehmenden Struktur (46) fixiert ist.

4. Kupplungseinheit nach einem der Ansprüche 1 bis 3, **dadurch gekennzeichnet, dass** die Sensoreinheit (82) mindesten zwei Abstandssensoren (92, 96) aufweist, die einen Abstand des zweiten Endes (66) von der kraftaufnehmenden Struktur (46) in unterschiedlichen Raumrichtungen erfassen.

5. Kupplungseinheit nach einem der Ansprüche 1 bis 4, **dadurch gekennzeichnet, dass** die Sensoreinheit (82) mindestens zwei einander gegenüberliegende Sensoren (92, 94) für die Erfassung einer Relativbewegung des zweiten Endes (66) relativ zu der kraftaufnehmenden Struktur (46) in einer Raumrichtung aufweist.

6. Kupplungseinheit nach einem der Ansprüche 1 bis 5, **dadurch gekennzeichnet, dass** die Sensoreinheit 82 mindestens zwei Sensoren (92, 96) für die Erfassung der Relativbewegung zwischen dem zweiten Ende (66) und der kraftaufnehmenden Struktur (46) in jeder Raumrichtung aufweist.

7. Kupplungseinheit nach einem der voranstehenden Ansprüche, **dadurch gekennzeichnet, dass** der Kanal (42) ausschließlich in dem Kupplungskugelträger (26) angeordnet ist und dass die kraftaufnehmende Struktur (46) durch einen den Kanal (42) umgreifenden Abschnitt des Kupplungskugelträgers (26) gebildet ist.

8. Kupplungseinheit nach einem der voranstehenden Ansprüche, **dadurch gekennzeichnet, dass** der Kanal (42') die Kupplungskugel (28) und einen sich an das erste Ende (32) des Kupplungskugelträgers (26) anschließenden Bereich (34, 112) desselben durchsetzt.

9. Kupplungseinheit nach einem der voranstehenden Ansprüche, **dadurch gekennzeichnet, dass** der Kanal (42) einen Kugelansatz (34) des Kupplungskugelträgers (26) durchsetzt, welcher die Kupplungskugel (28) trägt und dass insbesondere zumindest der Kugelansatz (34) die kraftaufnehmende und durch die Kraft auf die Kupplungskugel (28) deformierbare Struktur (46') bildet.

10. Kupplungseinheit nach einem der voranstehenden Ansprüche, **dadurch gekennzeichnet, dass** der Referenzfinger (62) mit seinem ersten Ende (64) relativ zur Kupplungskugel (28) fixiert angeordnet ist.

11. Kupplungseinheit nach einem der voranstehenden Ansprüche, **dadurch gekennzeichnet, dass** der Referenzfinger (62) mit seinem ersten Ende (64) relativ zum querschnittserweiterten Bereich (112) des Kupplungskugelträgers (26) fixiert angeordnet ist.

12. Kupplungseinheit nach einem der voranstehenden Ansprüche, **dadurch gekennzeichnet, dass** die Sensoreinheit (82) mit einer Auswerteeinheit (212) gekoppelt ist, welche einen kräftefreien Zustand der Kupplungseinheit (24) erkennt, in dem kräftefreien Zustand die Abstände zum zweiten Ende des Referenzfingers erfasst und ausgehend von dem kräftefreien Zustand aus der bezogen auf den kräftefreien Zustand relativen Abstandsänderung zwischen dem zweiten Ende (66) und der kraftaufnehmenden Struktur (46) die Kraft auf die Kupplungskugel (28) ermittelt.

13. Kupplungseinheit nach Anspruch 12, **dadurch gekennzeichnet, dass** in der Auswerteeinheit (212) eine für die Kupplungseinheit (24) spezifische Eichkurve abgespeichert ist, mit welcher die Ermittlung der auf die Kupplungskugel (28) wirkende Kraft erfolgt aus den Abstandsänderungen erfolgt.

## Claims

1. Coupling unit (24) for a trailer coupling (20) of a motor vehicle comprising a coupling ball (28) and a coupling ball carrier (26) carrying the coupling ball (28), wherein the coupling unit (24) comprises a load-bearing structure (46) which surrounds a channel (42) extending parallel to an axis (44), and wherein a reference finger (62) extending from a first end (64) to a second end (66) in a longitudinal direction (63) approximately parallel to the axis (44) is arranged in the channel (42), said finger being fixed at the first end (64) such as to be static relative to the load-bearing structure (46) and extends such as to be free from deformations of the load-bearing structure (46) up to the second end, **characterized in that** the reference finger (62) extends in the channel (42) in non-contacting manner relative to the load-bearing structure (46) from the first end (64) up to the second end (66), **in that** the reference finger (62) is an inherently stiff structure which keeps the second end (66) positioned rigidly or in bending-resistant manner relative to the first end (64), **in that** the second end (66) cooperates with a sensor unit (82) which, by means of at least one spacing sensor (92, 94, 96, 98), detects a relative position of the second end (66) relative to a region (76) of the load-bearing structure (46) surrounding it.

2. A coupling unit in accordance with Claim 1, **characterized in that** in particular the reference finger (62) is in the form of a bar.

3. A coupling unit in accordance with Claim 1 or 2, **characterized in that** the spacing sensor (92, 94, 96, 98) is fixed to the load-bearing structure (46).

4. A coupling unit in accordance with any of the Claims 1 to 3, **characterized in that** the sensor unit (82) comprises at least two spacing sensors (92, 96) which detect the spacing of the second end (66) from the load-bearing structure (46) in different spatial directions.

5. A coupling unit in accordance with any of the Claims 1 to 4, **characterized in that** the sensor unit (82) comprises at least two mutually opposite sensors (92, 94) for detecting a relative movement of the second end (66) relative to the load-bearing structure (46) in one spatial direction.

6. A coupling unit in accordance with any of the Claims 1 to 5, **characterized in that** the sensor unit 82 comprises at least two sensors (92, 96) for detecting the relative movement between the second end (66) and the load-bearing structure (46) in each spatial direction.

7. A coupling unit in accordance with any of the preceding Claims, **characterized in that** the channel (42) is arranged exclusively in the coupling ball carrier (26) and **in that** the load-bearing structure (46) is formed by a section of the coupling ball carrier (26) surrounding the channel (42).

8. A coupling unit in accordance with any of the preceding Claims, **characterized in that** the channel (42') passes through the coupling ball (28) and a region (34, 112) thereof adjoining the first end (32) of the coupling ball carrier (26).

9. A coupling unit in accordance with any of the preceding Claims, **characterized in that** the channel (42) passes through a ball-piece extension (34) of the coupling ball carrier (26) which carries the coupling ball (28), and **in that** in particular at least the ball-piece extension (34) forms the load-bearing structure (46') that is deformable by the load on the coupling ball (28).

10. A coupling unit in accordance with any of the preceding Claims, **characterized in that** the reference finger (62) is arranged such that the first end (64) thereof is fixed relative to the coupling ball (28).

11. A coupling unit in accordance with any of the preceding Claims, **characterized in that** the reference finger (62) is arranged such that the first end (64) thereof is fixed relative to the region of widened cross-section (112) of the coupling ball carrier (26).

12. A coupling unit in accordance with any of the preceding Claims, **characterized in that** the sensor unit (82) is coupled to an evaluating unit (212) which recognizes a load-free state of the coupling unit (24) and detects the spacings from the second end of the reference finger **in that** load-free state and, based upon said load-free state, determines the force on the coupling ball (28) from the relative change in spacing between the second end (66) and the load-bearing structure (46) taken with reference to the load-free state.

13. A coupling unit in accordance with Claim 12, **characterized in that** a calibration curve specific to the coupling unit (24) is stored in the evaluating unit (212) and by means thereof, the determination of the force acting upon the coupling ball (28) is effected from the changes in the spacing.

## Revendications

1. Unité de couplage (24) pour un dispositif d'attelage de remorque (20) d'un véhicule automobile, comprenant une boule d'attelage (28) et un support de boule d'attelage (26) portant la boule d'attelage (28), l'unité de couplage (24) présentant une structure d'absorption de force (46) qui entoure un canal (42) parallèle à un axe (44) et une tige de référence (62), dont le sens longitudinal (63) est approximativement parallèle à l'axe (44) depuis une première extrémité (64) jusqu'à une deuxième extrémité (66), étant disposée dans le canal (42), tige qui est immobilisée de manière fixe sur la première extrémité (64) par rapport à la structure d'absorption de force (46) et s'étend jusqu'à la deuxième extrémité sans déformations de la structure d'absorption de force (46), **caractérisée en ce que** la tige de référence (62) s'étend, dans le canal (42) depuis la première extrémité (64) sans contact avec la structure d'absorption de force (46) jusqu'à la deuxième extrémité (66), **en ce que** la tige de référence (62) a une structure rigide en soi, qui maintient la deuxième extrémité (66) positionnée de manière rigide ou résistante en flexion par rapport à la première extrémité (64), **en ce que** la deuxième extrémité (66) coopère avec une unité de détection (82) qui détecte une position relative de la deuxième extrémité (66) par rapport à une zone (76), entourant celle-ci, de la structure d'absorption de force (46) par au moins un capteur de distance (92, 94, 96, 98).

2. Unité de couplage selon la revendication 1, **caractérisée en ce que** notamment la tige de référence (62) est configurée en forme de barre.

3. Unité de couplage selon la revendication 1 ou la revendication 2, **caractérisée en ce que** le capteur de distance (92, 94, 96, 98) est immobilisé sur la structure d'absorption de force (46).

4. Unité de couplage selon l'une quelconque des revendications 1 à 3, **caractérisée en ce que** l'unité de détection (82) présente au moins deux capteurs de distance (92, 96) qui détectent une distance entre la deuxième extrémité (66) et la structure d'absorption de force (46) dans différentes directions spatiales.

5. Unité de couplage selon l'une quelconque des revendications 1 à 4, **caractérisée en ce que** l'unité de détection (82) présente au moins deux capteurs (92, 94) se faisant face destinés à la détection d'un mouvement relatif de la deuxième extrémité (66) par rapport à la structure d'absorption de force (46) dans une seule direction spatiale.

6. Unité de couplage selon l'une quelconque des revendications 1 à 5, **caractérisée en ce que** l'unité de détection (82) présente au moins deux capteurs (92, 96) destinés à la détection du mouvement relatif entre la deuxième extrémité (66) et la structure d'absorption de force (46) dans chaque direction spatiale.

7. Unité de couplage selon l'une quelconque des revendications précédentes, **caractérisée en ce que** le canal (42) est disposé exclusivement dans le support de boule d'attelage (26) et **en ce que** la structure d'absorption de force (46) est formée d'un tronçon du support de boule d'attelage (26) entourant le canal (42) .

8. Unité de couplage selon l'une quelconque des revendications précédentes, **caractérisée en ce que** le canal (42') traverse la boule d'attelage (28) et une zone de la zone (34, 112) raccordée à la première extrémité (32) du support de boule d'attelage (26).

9. Unité de couplage selon l'une quelconque des revendications précédentes, **caractérisée en ce que** le canal (42) traverse un épaulement de boule (34) du support de boule d'attelage (26) qui porte la boule d'attelage (28), et **en ce que**, en particulier, au moins l'épaulement de boule (34) forme la structure (46') d'absorption de force et déformable par la force appliquée sur la boule d'attelage (28).

10. Unité de couplage selon l'une quelconque des revendications précédentes, **caractérisée en ce que** la première extrémité (64) de la tige de référence (62) est immobilisée par rapport à la boule d'attelage (28).

11. Unité de couplage selon l'une quelconque des revendications précédentes, **caractérisée en ce que** la première extrémité (64) de la tige de référence (62) est immobilisée par rapport à la zone (112), dont la section transversale est élargie, du support de boule d'attelage (26).

12. Unité de couplage selon l'une quelconque des revendications précédentes, **caractérisée en ce que** l'unité de détection (82) est couplée à une unité d'analyse (212) qui reconnaît l'état sans forces de l'unité de couplage (24), détecte les distances par rapport à la deuxième extrémité de la tige de référence dans l'état sans forces et détermine, à partir de l'état sans forces, la force exercée sur la boule d'attelage (28) à partir de la modification relative, par rapport à l'état sans forces, de la distance entre la deuxième extrémité (66) et la structure d'absorption de force (46).

13. Unité de couplage selon la revendication 12, **caractérisée en ce qu'**une courbe d'étalonnage spécifique à l'unité de couplage (24) est enregistrée dans l'unité d'analyse (212) et permet la détermination de forces agissant sur la boule d'attelage (28) à partir des modifications de la distance.
